# EUROPEAN PATENT SPECIFICATION

(11) **EP 0 880 844 B1**
(45) Date of publication and mention of the grant of the patent: **17.11.2004**
(21) Application number: 97941134.5
(22) Date of filing: 26.09.1997
(51) Int. Cl.: H04L 25/06, H03K 5/003, H04L 25/45

(54) **CURRENT DISTRIBUTION CIRCUIT HAVING AN ADDITIONAL PARALLEL DC-CURRENT SINKING BRANCH**
SCHALTUNG ZUR STROMVERTEILUNG MIT ZUSÄTZLICHEM PARALLELEM GLEICHSTROMSENKKREIS
CIRCUIT DE REPARTITION DU COURANT DOTE D'UNE DERIVATION SUPPLEMENTAIRE PARALLELE D'ABSORPTION DU COURANT CONTINU

(30) Priority: 26.09.1996 EP 96202693
(43) Date of publication of application: 02.12.1998
(73) Proprietor: Koninklijke Philips Electronics N.V., 5621 BA Eindhoven (NL)
(72) Inventor: MULDER, Jacob, NL-5656 AA Eindhoven (NL); THUS, Fransiscus, Johannes, Maria, NL-5656 AA Eindhoven (NL); LABB , Eric, Christophe, NL-5656 AA Eindhoven (NL)
(74) Representative: Mak, Theodorus Nicolaas
(86) International application number: PCT/IB1997/001174
(87) International publication number: WO 1998/013978

(56) References cited:
- DE-A- 4 234 402
- US-A- 4 785 205
- US-A- 5 027 017
- US-A- 5 311 071

## Description

The present invention concerns a current distribution circuit comprising:
- a first at least DC current sinking branch, which is provided with the main current stream of a first controlled semiconductor having a first control input,
- a second current sinking branch connected in parallel to the series arrangement of the first current sinking branch, which second current sinking branch is provided with a second control input, and
- means for controlling the currents through the first and second current sinking branches, which controlling means are coupled to the first and second control inputs respectively.

The present invention also concerns a telecommunication device provided with a current distribution circuit.

Such a current distribution circuit and device are known from application note ETT/AN93015 on the TEA 1093 chip. In particular this note discloses a current distribution circuit comprising:
- a first AC and DC current sinking branch, which is provided with the series arrangement of the main current stream of a first current controlled semiconductor having a first combined AC/DC current control input, and a stabilising circuit for providing a DC supply voltage,
- a second AC current sinking branch connected in parallel to the series arrangement of the first current sinking branch, which second current sinking branch is provided with a second AC current control input, and
- means for controlling said currents through the first and second current sinking branches, which controlling means are coupled to the first and second current control inputs respectively.

Such a current distribution circuit is being applied in telecommunication devices, such as for example a subscriber telephone, a handsfree telephone, a facsimile, a WEB-television having a telephone card, a personal computer having a telephone card etc. Usually such telephone ICs' are capable of controlling the AC-speech signals on the telephone line to facilitate communication between the telecommunication device and a central device. Furthermore they are equipped for processing the DC-line-current from the telephone line in the first current sinking branch. The stabilising circuit provides the DC supply voltage having a relative high magnitude. Processing a necessary maximum DC-line-current in the first current sinking branch of say for example approximately 140 mA would lead to an IC having a relatively large chip area for the DC current controlled semi-conductor transistor used in that first current sinking branch, because said transistor has to have a certain limited collector/emitter voltage. This collector/emitter voltage is limited and has to be kept limited because the DC supply voltage needs to have a relative high magnitude for controlling present day telephone add-on equipment, such as handsfree facilities, extra loudspeakers, and other peripheral devices.

It is an object of the present invention to sink the necessary maximum DC-line-current at all times under all operating conditions and with a minimal chip area.

Thereto the present invention is characterised in that the current distribution circuit comprises an at least DC current measuring means coupled to the controlling means for providing a measure for at least the DC-current in the first current sinking branch, and that the second current sinking branch is a second at least DC-current sinking branch whose second control input is connected to the controlling means for leading an excessive part of at least the DC-current through the second current sinking branch.

The idea underlying the present invention is that the first current sinking branch sinks a part of the line-current normally used for deriving a DC supply voltage there from, whereas the second current sinking branch is used to sink a surplus part of at least the DC-line-current. Because the second current sinking branch does not contain the stabilising circuit, sinking the surplus, excess or top-part of at least the DC-current of the first current sinking branch through the second current sinking branch can take place in said second current sinking branch at a relatively high collector/emitter voltage. As a consequence thereof the chip area for taking up such a relatively high magnitude of DC current at larger collector/emitter voltages is reduced.

A further advantage of the current distribution circuit and device according to the invention is, that controlling the AC-currents in the first and second current sinking branches is still possible. In fact a possible simultaneous AC/DC current control in both the first current sinking branch and the second current sinking branch provides for a double control function in in particular the second current sinking branch.

At present the invention will be elucidated further together with the additional advantages with reference to the accompanying drawing, wherein corresponding parts in the different figures are indicated by means of the same reference numerals. In the drawing:
Fig. 1 shows a possible embodiment of the current distribution circuit according to the invention,
Fig. 2 shows a general outline of a further embodiment of the current distribution circuit according to the invention, and
Fig.3 schematically shows a telecommunication device provided with a current distribution circuit according to the present invention.

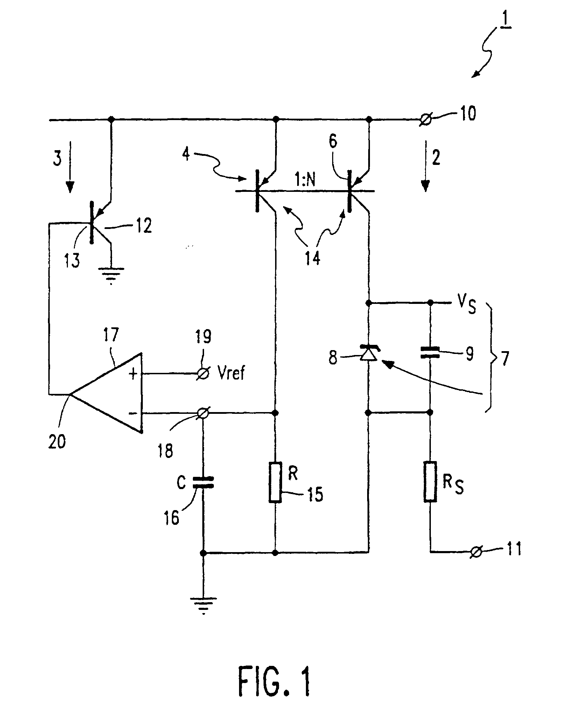

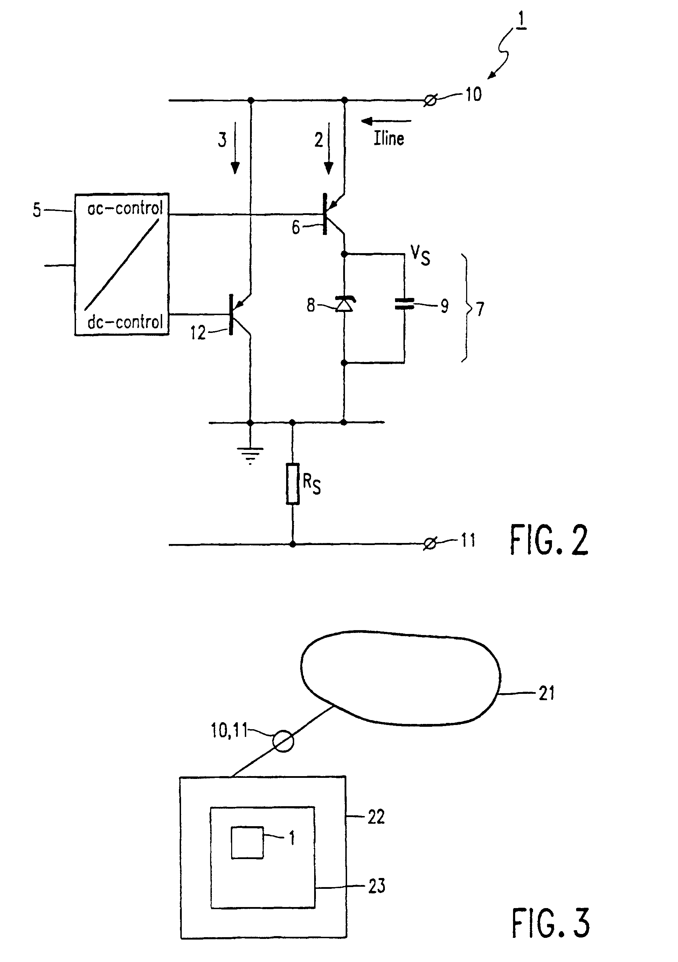

The schematic view of Fig. 1 shows a current distribution circuit 1, comprising a first DC current branch 2, a second current sinking branch 3 and means 4 for sensing at least the current through the first current sinking branch 2. In addition the current distribution circuit comprises means 5 (see fig. 2) for controlling the AC current through branch 2. The first current sinking branch 2 comprises the series arrangement of a first for example current controlled semi-conductor transistor 6, and a circuit 7 which could for example be a stabilising circuit. The stabilising circuit 7 is shown to have a zenerdiode 8 connected in parallel to a capacitor 9 for supplying a supply voltage V_{S}. Resistor Rₛ is a series resistor determining the voltage current slope between terminals 10 and 11. The schematically shown second current sinking branch 3 comprises a second for example current or voltage controlled semi-conductor transistor 12, provided with a control input 13. Furthermore the current distribution circuit 1 comprises an at least DC current measuring means, which is in this embodiment built up as a current mirror 14. Herewith the main current through the transistor 6 is mirrored into the transistor 4 by a ratio 1:N. The at least DC measuring means 14 is connected in series with a low pass filter 15, 16 whose RC value is chosen such, that frequencies of for example 5 Hz or lower are passed to a comparator means 17. The comparator has two inputs 18 and 19. Input 18 is connected to the low pass filter 15, 16, whereas input 19 is connected to a reference voltage V_{ref} supplied by a DC voltage reference source (not shown). Furthermore the comparator 17 is provided with an output 20 connected to the control input 13 of the transistor 12. V_{ref} is chosen such that the second current sinking branch 3 comes into operation in cases wherein it is necessary that an excess DC current above for example 40 mA flows through the second current sinking branch 3. Because of the larger collector/emitter voltage across the transistor 12 in the second current sinking branch its transistor chip area is lower than the chip area for a transistor which would be equipped to take up a similar current in cases wherein its collector/emitter voltage is lower. In an embodiment not further elucidated the information about the point whereon the second branch 3 has to come into operation, can also be deduced from the voltage across the series resistor, which resistor is connected in series with one of the line terminals 10 and 11.

Fig. 2 shows a bloc schematic view of the various ways of controlling the AC and DC current through both branches 2 and 3. In a way known per se the AC control through branches 2 and 3 is such that in order to prevent distortion during large AC signals the second branch transistor 12 takes over the line-current on terminals 10, 11 during large AC signal excursions on the line 10, 11. Second branch transistor 12 will preferable sink the AC current during large AC signal excursions in addition to taking over a surplus part of the DC current in branch 2, in order to decrease the effectively needed chip area.

Figure 3 schematically shows a network 21 connected through the line terminals 10, 11 to a telecommunication device 22 which is provided with a telephone set 23 having a current distribution circuit 1.

## Claims

1. A current distribution circuit (1) comprising:
- a first at least DC current sinking branch (2), which is provided with the main current stream of a first controlled semiconductor (6) having a first control input,
- a second current sinking branch (3) connected in parallel to the series arrangement of the first current sinking branch, which second current sinking branch is provided with a second control input, and
- means (5) for controlling the currents through the first and second current sinking branches, which controlling means are coupled to the first and second control inputs respectively,
**characterised in that** the current distribution circuit (1) comprises an at least DC current measuring means (4) coupled to the controlling means for providing a measure for at least the DC-current in the first current sinking branch, and that the second current sinking branch is a second at least DC-current sinking branch whose second control input is connected to the controlling means for leading an excessive part of at least the DC-current through the second current sinking branch.

2. The current distribution circuit according to claim 1, **characterised in that** the current distribution circuit comprises a comparator (17) coupled to the at least DC current measuring means and to a reference source (19) for determining at least the DC current value in the first current sinking branch where above the second current sinking branch comes into operation.

3. The current distribution circuit according to claim 2, **characterised in that** the at least DC current measuring means comprises a low pass filter.

4. The current distribution circuit according to claim 1, 2 or 3, **characterised in that** the at least DC current measuring means comprises a current mirror means.

5. The current distribution circuit according to one of the claims 1, 2, 3 or 4, **characterised in that** the at least DC current measuring means comprises a line-current series resistor.

6. The current distribution circuit according to claim 1, 2, 3, 4 or 5, **characterised in that** the first and/or second controlled semi-conductor comprises at least a transistor means.

7. The current distribution circuit according to one of the claims 1, 2, 3, 4, 5 or 6, **characterised in that** the first and second current sinking branches are formed as DC and AC current sinking branches, and that the means for controlling the current through the first and second current sinking branches are means for controlling the AC and DC currents through the first and second current sinking branches.

8. Telecommunication device provided with the current distribution circuit according to one of the claims 1, 2, 3, 4, 5, 6 or 7.

## Patentansprüche

1. Stromverteilungsschaltung (1), welche die nachfolgenden Elemente umfasst:
- einen ersten, wenigstens Gleichstromsenkkreis (2), der mit dem Hauptstromfluss des ersten gesteuerten Halbleiters (6) mit einem ersten Steuereingang versehen wird,
- einen zweiten Stromsenkkreis (3), der parallel zu der Reihenschaltung des ersten Stromsenkkreises geschaltet ist, wobei dieser zweite Stromsenkkreis mit einem zweiten Steuereingang versehen ist, und
- Mittel (5) zur Steuerung der Ströme durch den ersten und den zweiten Stromsenkkreis, wobei diese Steuermittel mit dem ersten bzw. dem zweiten Steuereingang gekoppelt sind,
**dadurch gekennzeichnet, dass** die Stromverteilungsschaltung (1) ein wenigstens Gleichstrommessmittel (4) aufweist, die mit den Steuermitteln gekoppelt ist zum Liefern eines Maßes für wenigstens den Gleichstrom in dem ersten Stromsenkkreis, und dass der zweite Stromsenkkreis ein zweiter wenigstens Gleichstromsenkkreis ist, dessen zweiter Steuereingang mit den Steuermitteln gekoppelt ist zum Hindurchführen eines überflüssigen Teils wenigstens des Gleichstroms durch den zweiten Stromsenkkreis.

2. Stromverteilungsschaltung nach Anspruch 1, **dadurch gekennzeichnet, dass** die Stromverteilungsschaltung eine Vergleichsschaltung (17) aufweist, die mit den wenigstens Gleichstrommessmitteln und mit einer Bezugsquelle (19) gekoppelt ist, zur Ermittlung wenigstens des Gleichstromwertes in dem ersten Stromsenkkreis, wobei über diesem Wert der zweite Stromsenkkreis wirksam wird.

3. Stromverteilungsschaltung nach Anspruch 2, **dadurch gekennzeichnet, dass** die wenigstens Gleichstrommittel ein Tiefpassfilter aufweisen.

4. Stromverteilungsschaltung nach Anspruch 1, 2 oder 3, **dadurch gekennzeichnet, dass** die wenigstens Gleichstrommessmittel ein Stromspiegelmittel aufweisen.

5. Stromverteilungsschaltung nach einem der Ansprüche 1, 2, 3 oder 4, **dadurch gekennzeichnet, dass** die wenigstens Gleichstrommessmittel einen Netzstromreihenwiderstand aufweisen.

6. Stromverteilungsschaltung nach Anspruch 1, 2, 3, 4 oder 5, **dadurch gekennzeichnet, dass** der erste und/oder zweite gesteuerte Halbleiter wenigstens ein Transistormittel aufweist.

7. Stromverteilungsschaltung nach einem der Ansprüche 1, 2, 3, 4, 5 oder 6, **dadurch gekennzeichnet, dass** der erste und der zweite Stromsenkkreis als DC- und AC-Stromsenkkreis ausgebildet sind, und dass die Mittel zur Steuerung des Stromes durch den ersten und zweiten Stromsenkkreis Mittel sind zur Steuerung der AC- und DC-Ströme durch den ersten und zweiten Stromsenkkreis.

8. Telekommunikationsvorrichtung mit der Stromverteilungsschaltung nach einem der Ansprüche 1, 2, 3, 4, 5, 6 oder 7.

## Revendications

1. Circuit de distribution de courant (1) comprenant:
- une première branche d'abaissement d'au moins le courant continu (2) qui est pourvue du flux de courant principal d'un premier semi-conducteur commandé (6) ayant une première entrée de commande,
- une deuxième branche d'abaissement de courant (3) qui est connectée en parallèle au montage en série de la première branche d'abaissement de courant, laquelle deuxième branche d'abaissement de courant est pourvue d'une deuxième entrée de commande, et
- des moyens (5) pour commander les courants traversant les première et deuxième branches d'abaissement de courant, lesquels moyens de commande sont couplés aux première et deuxième entrées de commande, respectivement,
**caractérisé en ce que** le circuit de distribution de courant (1) comprend un moyen de mesure d'au moins le courant continu (4) qui est couplé aux moyens de commande pour fournir une mesure pour au moins le courant continu dans la première branche d'abaissement de courant et **en ce que** la deuxième branche d'abaissement de courant est une branche d'abaissement d'au moins le courant continu dont la deuxième entrée de commande est connectée aux moyens de commande pour conduire une partie excessive d'au moins le courant continu à travers la deuxième branche d'abaissement de courant.

2. Circuit de distribution de courant selon la revendication 1, **caractérisé en ce que** le circuit de distribution de courant comprend un comparateur (17) qui est couplé au moyen de mesure d'au moins le courant continu et à une source de référence (19) pour déterminer au moins la valeur de courant continu dans la première branche d'abaissement de courant au-dessus de laquelle la deuxième branche d'abaissement de courant se met en état de fonctionnement.

3. Circuit de distribution de courant selon la revendication 2, **caractérisé en ce que** le moyen de mesure d'au moins le courant continu comprend un filtre passe-bas.

4. Circuit de distribution de courant selon la revendication 1, 2 ou 3, **caractérisé en ce que** le moyen de mesure d'au moins le courant continu comprend un moyen de miroir de courant.

5. Circuit de distribution de courant selon l'une quelconque des revendications précédentes 1, 2, 3 ou 4, **caractérisé en ce que** le moyen de mesure d'au moins le courant continu comprend une résistance série de courant de ligne.

6. Circuit de distribution de courant selon la revendication 1, 2, 3, 4 ou 5, **caractérisé en ce que** le premier et/ou le deuxième semi-conducteur commandé comprend au moins un moyen de transistor.

7. Circuit de distribution de courant selon l'une quelconque des revendications précédentes 1, 2, 3, 4, 5 ou 6, **caractérisé en ce que** les première et deuxième branches d'abaissement de courant sont formées en tant que des branches d'abaissement de courant continu et alternatif et **en ce que** les moyens pour commander le courant traversant les première et deuxième branches d'abaissement de courant sont des moyens pour commander les courants alternatif et continu traversant les première et deuxième branches d'abaissement de courant.

8. Dispositif de télécommunication qui est pourvu du circuit de distribution de courant selon l'une quelconque des revendications précédentes 1, 2, 3, 4, 5, 6 ou 7.
